# EUROPEAN PATENT APPLICATION

(11) **EP 1 304 044 A2**
(43) Date of publication of application: **23.04.2003**
(21) Application number: 02257279.6
(22) Date of filing: 21.10.2002
(51) Int. Cl.: A23L 1/22, A23P 1/08, A23P 1/12, A23G 3/00, C11D 3/50

(54) **Hydroxypropyl cellulose encapsulation material**

(30) Priority: 22.10.2001 US 54239
(71) Applicant: INTERNATIONAL FLAVORS & FRAGRANCES INC., New York New York 10019 (US)
(72) Inventor: Lou, Wen Chin, Morris, New Jersey 07950 (US); Popplewell, Lewis Michael, Monmouth, New Jersey 07751 (US)
(74) Representative: Mercer, Christopher Paul

(57) **Abstract**

Hydroxypropyl cellulose is employed to encapsulate flavor or fragrance materials that could be employed in diverse applications such as food products and laundry applications.

## Description

### Field of the Invention

The present invention relates to an encapsulation composition in which the encapsulate, preferably a flavor or fragrance material, is encapsulated in a matrix containing hydroxypropyl cellulose.

### Background of the Invention

As described in U.S. Patent No. 6,187,351 ('351 patent), the encapsulation of various materials such as medications, pesticides, flavors and fragrances is an ongoing area of research. The '351 patent, hereby incorporated by reference in its entirety, provides an overview of the art used to incorporate various materials. The '351 patent adds to this body of work by disclosing the use of various food polymers, maltodextrin, and a saccharide, disaccharide or corn syrup material. The food polymers disclosed in the patent are set forth in column 10, lines 29-37.

Despite the disclosure of the above patent and the numerous patents cited therein, there remains a continuing need to provide materials in encapsulated form that are stable at elevated temperatures and/or dissolve slowly in aqueous environments, particularly for volatile materials, such as flavors and fragrances.

### Summary of the Invention

One embodiment of the invention is a composition comprising:
a flavor or fragrance encapsulate encapsulated in a matrix, the matrix which may be amorphous or partially crystalline, the matrix comprising:
   from about 60 to about 99.5 weight percent of materials selected from the group consisting of sugars, maltodextrin having 5 to 20 dextrose equivalent (DE), fats, silicone dioxide, polyhydric alcohols, corn syrup solids, starches, modified starches, emulsifiers and food acids;
   from about 0.5 to about 20 weight percent, preferably from about 2 to about 10 weight percent of hydroxypropyl cellulose; and
   from about 0.1 to about 20 weight percent of a flavor or fragrance material.

In a second embodiment of the invention the above composition is prepared by a process that comprises the following steps of mixing the components together, optionally with a liquid plasticizer, and providing a heating source such as an extruder to obtain a melted matrix and then creating the desired particle size by forming, cooling, and sizing operations.

These and other embodiments of the present invention will become apparent by reading the detailed description and accompanying examples.

### Detailed Description of the Invention

As used herein, flavor is understood to include spice oleoresins derived from allspice, basil, capsicum, cinnamon, cloves, cumin, dill, garlic, marjoram, nutmeg, paprika, black pepper, rosemary, and turmeric, essential oils, anise oil, caraway oil, clove oil, eucalyptus oil, fennel oil, garlic oil, ginger oil, peppermint oil, onion oil, pepper oil, rosemary oil, spearmint oil, citrus oil, orange oil, lemon oil, bitter orange oil, tangerine oil, alliaceous flavors, garlic, leek, chive, and onion, botanical extracts, arnica flower extract, chamomile flower extract, hops extract, marigold extract, botanical flavor extracts, blackberry, chicory root, cocoa, coffee, kola, licorice root, rose hips, sarsaparilla root, sassafras bark, tamarind and vanilla extracts, protein hydrolysates, hydrolyzed vegetable proteins, meat protein hydrolyzes, milk protein hydrolyzates and compounded flavors both natural and artificial including those disclosed in S. Heath, *Source Book of Flavors*, Avi Publishing Co., Westport Connecticut, 1981, pages 149-277.

Many types of fragrances can be employed in the present invention, the only limitation being the compatibility with the other components being employed. Suitable fragrances include but are not limited to fruits such as almond, apple, cherry, grape, pear, pineapple, orange, strawberry, raspberry; musk, flower scents such as lavender-like, rose-like, iris-like, and carnation-like. Other pleasant scents include herbal and woodland scents derived from pine, spruce and other forest smells. Fragrances may also be derived from various oils, such as essential oils, or from plant materials such as peppermint, spearmint and the like.

A list of suitable fragrances is provided in U.S. Patent No. 4,534,891, the contents of which are incorporated by reference as if set forth in its entirety. Another source of suitable fragrances is found in Perfumes, Cosmetics and Soaps, Second Edition, edited by W. A. Poucher, 1959. Among the fragrances provided in this treatise are acacia, cassie, chypre, cyclamen, fern, gardenia, hawthorn, heliotrope, honeysuckle, hyacinth, jasmine, lilac, lily, magnolia, mimosa, narcissus, freshly-cut hay, orange blossom, orchid, reseda, sweet pea, trefle, tuberose, vanilla, violet, wallflower, and the like.

When the encapsulate is lipophilic, the encapsulate is dispersed in the amorphous matrix of the final product usually with the aid of an emulsifier added to the lipophilic phase or in the matrix mixture. In contrast, when the matrix is hydrophilic, or water soluble, the final product contains the encapsulate as a dissolved solute and or as a dispersed encapsulate. It is preferred that the elements of the invention are thoroughly heated and most preferably melted in order to form the matrix. However, the present invention may still be carried out if all of the elements are not melted. The final structure of the matrix, i.e., whether the matrix is crystalline or amorphous, will depend on the materials contained in the matrix as well as how the elements were admixed and melted.

The amount of the encapsulate provided in the matrix will depend on various factors including in part on the nature of the matrix, and the end use of the mixture. Typically the final composition will contain from about 2.5 to about 15 weight percent of encapsulate, preferably from about 4 to about 12 and most preferably from about 5 to about 10 weight percent of the encapsulate.

The matrix is comprised of one or more of the following materials: sugars, maltodextrin having 5 to 20 dextrose equivalent (DE), fats, siliconee dioxide, polyhydric alcohols, corn syrup solids, starches, modified starches, emulsifiers and food acids.

The level of maltodextrin used in the matrix, comprises from about 25 to about 98 weight percent, preferably form about 35 to about 75 weight percent, the maltodextrin preferably having a DE of from about 5 to about 20. Preferably the maltodextrin has a DE of from 10 to about 15. As is generally appreciated by those with skill in the art, maltodextrin is commercially supplied with a water content of from about 4 to about 7 weight percent. Additional water may also be added with the addition of various plasticizers or with any of the other components used in the present invention.

The amount of water permitted in the composition of the invention is important because it has an effect on the glass transition temperature of the invention. The effect of water on the T_{g} is apparent through the use of differential scanning calorimeter (DSC) techniques. The T_{g} should be greater than 35 °C, preferable the T_{g} should be above 40 °C. These T_{g} values typically limit the water level of the encapsulate materials from about 5 to about 10 weight percent, preferably from about 6 to about 9 weight percent.

Suitable food acids useful in the invention include citric acid, tartaric acid, malic acid and the like. The level of food acid can vary greatly from 1 to about 80 weight percent, preferably from 5 to about 60 and most preferably from 10 to about 40 weight percent. The encapsulation technology of the present invention provides the food acid from dispersing in the matrix. As a result, the food acids provide an improved tartness to the food products which contain the food acid.

In addition to the maltodextrin, other materials can be used in the matrix such as" starches and modified starches. In a preferred embodiment, the level of starches is from about 5 to about 75 weight percent, preferably from 10 to about 60 and most preferably from about 15 to about 50 weight percent.

Mono and di-saccharides suitable for use in the invention include glucose, fructose, lactose, galactose, ribose, xylose, sucrose, maltose, polyols such as glycerin and propylene glycol, as well as corn syrups may also be employed. The level of the mono and di saccharides range from about 1 to about 60, preferably from about 4 to about 45 and most preferably from about 10 to about 30 weight percent of the composition.

Other ingredients such as food emulsifiers including monoglycerides of fatty acids, distilled succinylated monoglycerides of fatty acids, sorbitan fatty acid esters; distilled acetylated monoglycerides of fatty acids, monoglycerides of fatty acids and fats and oils from food lipid sources can be added to the matrix. The emulsifiers are typically added in amounts at levels of from about 0.25 to about 2.5 weight percent of the encapsulations.

In addition to the above-recited materials, other materials conventionally used in the art can be employed in the matrix of the invention. Suitable materials include but are not limited to colorings, sweeteners, diluents, fillers, preservatives, anti-oxidants, stabilizers, lubricants and the like.

In the present invention, hydroxypropyl cellulose (HPC) is employed. The HPC useful in the invention having a viscosity of from about 3 to about 100,000 centipoise, preferably from about 4,000 to about 15,000 centipoise. The viscosity is measured at 20°C and 2 weight percent solution. The level of HPC is from about 0.5 to about 20 weight percent, preferably from about 2 to about 10 weight percent and most preferably from about 3 to about 5 weight percent.

The manufacture of the encapsulation materials of the present invention can be thought of comprising three process steps of: forming, cooling and sizing.

The forming process involves the admixture of the components and heating of the mixture . It is preferable to have the contents melted in order to have a uniform mixture and consistency of product. The flavor or fragrance may then be added to the mixture either before or during the heating process and then admixed to provide consistency.

The mixture containing the flavor or fragrance is then cooled using any appropriate means of convective, conductive, or evaporative heat removal . The cooled material is then sized using conventional processes such as chopping or grinding of the material. Size classification can be done to remove fines or oversized particles. In a preferred embodiment, the sizing of the particles is done by an extrusion process in which a strip or rod-like material is formed followed by a cutting or chopping process.

The present invention provides a flavor or fragrance system that can withstand the high-temperature/high-moisture environments encountered in certain food-processing operations yet still allow release of the flavor/fragrance active when the product is consumed or used. The encapsulation method of the present invention allows the encapsulated flavor or fragrance to withstand vigorous processing conditions without dissolving into the bulk system or volatilizing. The robust nature of the encapsulated materials are most readily obtained when the water levels in the product composition are minimized, less than 10 weight percent of the total composition, more preferably less than 5 and most preferably less than 3 weight percent water in the total composition. Depending on the level of the water contained in the composition and the formulation of the composition, it is possible to have the encapsulated flavor or fragrance material remain encapsulated at temperatures greater than about 130, preferably above 140 and most preferably 150°C. The higher temperatures allow the materials to be processed at higher temperatures without volatilizing the flavor or fragrance materials.

The matrix system described in the invention can be employed in various products such as hard, gummy and chewy candies representing a range of temperature/moisture conditions. Other applications included snack foods, cereals, baked goods, pasta snacks, dairy foods and gums in which the flavor could be encapsulated in the matrix and not released until the matrix is compromised. An additional advantage of the invention is the enhanced visual appeal in the finished product since the flavor particle can remain intact if the matrix and product processing conditions are properly selected.

In addition to food products, the present invention has utility in fragrance applications such as laundry detergent powders and laundry detergent tablets. Due to the slower solubility of the particles in washing conditions, the fragrance would be delivered later in the wash cycle providing delayed release of fragrance and ultimately improved deposition and substantivity. Additional possible uses of the slow-dissolving product include granular dishwashing detergents, antiperspirants, and deodorants.

In the method of the present invention, the flavor or fragrance material is encapsulated with a matrix of HPC and sugars or maltodextrins, or other carrier materials. The flavor or fragrance may be in the form of a solid, liquid or paste. Preferably, the active agent is in the form of a liquid or solid, most preferably a liquid . The encapsulation may be carried out by any conventional method, including spray drying, melt extrusion, and freeze drying. These methods are set forth in greater detail in U.S. Patent No. 6,245,366, the contents are incorporated by reference as if set forth in its entirety. The preferred method is to extrude the material and then cool and size the material to achieve the desired granulation.

The chemical and physical properties of the encapsulated active ingredient will depend on the matrix and method used for encapsulation as well as the identity of the active agent itself. For example, encapsulated active ingredients prepared by spray drying will have a particle size of from about 5 to about 200 microns, and a solid density of from about 1 to about 1.4 grams per cubic centimeters. Other features of the invention will become apparent in the course of the following descriptions of exemplary embodiments that are given for illustration of the invention and are not intended to be limited thereof.

### Example 1

A formula containing carriers such as sugars, maltodextrins, fats and a HPC, some containing an encapsulated flavor or fragrance and some not containing either flavor or fragrance, was subjected to temperatures of from 100 to 190°C at low moisture conditions for a short period of time, about 2 minutes on average. The heat treated mass was cooled and sized to create solid flavoring particles or granules. The granules/particles will not dissolve or substantially deform in hard candy applications that reach approximately 290°F at 90-98% total solids. Additionally in other confectionery systems processed at 50-80% solids and 140-220°F (gummy candies, chewy candies) the products did not dissolve or dissolved at a very slow rate, thus allowing the products to survive the manufacturing process largely intact. It is hypothesized that the slower solubility will improve the flavor/active delivery in higher moisture food systems as well as delivery of fragrances in non-food applications.

### Example 2

Three versions of a cherry flavor were made via melt extrusion. Each flavor contained from about 3 to about 5 weight percent of flavor, about 2 weight percent lake color blend (blend of Red #40 and Blue #1 lakes) and 5 weight % acid blend (blend of citric and malic acid) as actives. The balance of the formulation contained a common blend of maltodextrin GPC 15 DE, M150) sucrose, cottonseed oil and silicone dioxide. The level of HPC was allowed to vary.

The HPC levels were varied as follows:

| | |
|---|---|
| Sample A | No HPC |
| Sample B | 2 weight percent HPC (Hercules KLUCEL® GF) |
| Sample C | 3 weight percent HPC (Hercules KLUCEL® GF). |

Each formulation was extruded under similar conditions, cooled and then sized to yield -10/+14 granules.

The granules were added to the following hard candy formulation and tested for stability:

| | |
|---|---|
| Sugar, fine granule weight % | 56 |
| Corn syrup 43 BE | 27 |
| Tap water | 17 |
| Total | 100 |

The sugar, corn syrup and water were weighed into a 400 milliliter beaker and stirred together. The ingredients were heated in a 1000 watt microwave for approximately 105 seconds, until the temperature of the mixture reaches approximately 300°F. The beaker was removed from the microwave and was briefly stirred. The extruded flavor was added and blended until uniform. The melt was then deposited into moulds and allowed to cool. Once cooled, the product was removed from the moulds and evaluated.

The results indicated that in the absence of HPC, the contents of sample A were significantly melted into the candy bleeding color and showing little in the way of particle retention. The samples containing HPC, Samples B & C, retained their shape and color in the candy resulting in a clear candy with discrete particles. When tasted, the candies containing HPC, gave a slight rough surface as the product dissolved, indicating that the extruded flavors has a slightly slower dissolution rate than the other outer candy.

### Example 3

Two versions of a fragrance extrudate were made.

The first fragrance (A) was made containing 10 weight percent of a fragrance consisting of equal parts of hexyl cinnamic aldehyde, LILLIAL® (International Flavors & Fragrances Inc.), and HELIONAL® (International Flavors & Fragrances Inc.) and was encapsulated in a matrix consisting of maltodextrin, sucrose, maltose and silicone dioxide. Lecithin was included as an emulsifier.

The second fragrance (B) was made containing 12 weight percent of HELIONAL® and was encapsulated consisting of 2% (total product weight) KLUCEL® GF (Hercules Inc.), sucrose maltodextrin cottonseed oil, distilled monoglyceride and silicone dioxide. Lecithin was used as an emulsifier.

Particles were made and screened to between 30 and 40 US mesh and were dissolved in 66°C water at a level of 0.5 weight percent. The dissolution was monitored via spectrophotometer determination of light transmission. As evidenced by the data in the chart below, the system with the HPC in the matrix released the fragrance at a slower rate.

| **AQUEOUS % FRAGRANCE RELEASE AT 66°C** | | |
|---|---|---|
| Time (Seconds) | Fragrance A | Fragrance B |
| 0 | 0 | 0 |
| 10 | 35 | 20 |
| 20 | 60 | 40 |
| 30 | 100 | 50 |
| 40 | 100 | 60 |
| 60 | 100 | 80 |

This example demonstrates that the system of the present invention is useful in applications that require particles to withstand high moisture and heat during preparation.

### Example 4

In order to evaluate the effectiveness of the present invention, a liquid cherry flavor was added to a hard candy formulation. The candy system was identical except for the form of flavor used. In the control product, liquid flavor was used . In the second candy system, an extruded form of the same flavor was incorporated in which a standard carbohydrate mixture was used as the encapsulating matrix. In the third candy, an extruded form of the same flavor was incorporated in which a carbohydrate mixture containing HPC (KLUCEL®, Hercules Inc.) at a level of 10 weight percent was used as the encapsulating matrix. To each of the candy systems, a liquid flavor content of 0.12 weight percent was added after the candy temperature reached 143°C.

After processing the flavor, levels remaining in the candy was measured by extraction of the candies followed by GC analysis of the extract. The control candy retained only 2.3 % of the flavoring originally supplied after processing. The candy which had the flavor encapsulated in the standard carbohydrate matrix retained 41% of the original flavor provided to the candy after processing. The candy that had the flavor encapsulated in the HPC retained about 92 % of the flavoring supplied to it.

The candies were sampled for taste, and the candy which contained the HPC had such a strong cherry flavor that it was determined that the flavor was too strong and that the flavor loading should be reduced. This example demonstrates that the incorporation of HPC in the encapsulating matrix greatly reduces the loss of flavor during processing.

## Claims

1. A composition comprising from 0.1 to 20 weight percent of a flavor or fragrance material encapsulated in matrix comprising from 60 to 99.5 weight percent of materials selected from the group consisting of sugars; maltodextrin having 5 to 20 dextrose equivalent (DE), fats, silicone dioxide, polyhydric alcohols, corn syrup solids, starch, modified starches, emulsifiers and food acids; and from 0.5 to 20 weight percent of hydroxypropyl cellulose.

2. The composition of claim 1 wherein matrix is from 5 to 95 weight percent.

3. The composition of claim 2 wherein the maltodextrin has a dextrose equivalent of from 5 to 15.

4. The composition of claim 3 wherein the maltodextrin has a dextrose equivalent of from 10 to 14.

5. The composition of claim 1 wherein the level of hydroxypropyl cellulose is from 2 to 10 weight percent.

6. The composition of claim 1 wherein the composition has a Tg of greater than 35°C.

7. The composition of claim 1 wherein the matrix comprises from 5 to 75 weight percent starch.

8. The composition of claim 1 wherein the matrix comprises from 1 to 80 weight percent of a food acid.
